# EUROPÄISCHE PATENTSCHRIFT

(11) **EP 3 394 802 B1**
(45) Veröffentlichungstag und Bekanntmachung des Hinweises auf die Patenterteilung: **14.06.2023**
(21) Anmeldenummer: 16828712.6
(22) Anmeldetag: 22.12.2016
(51) Int. Cl.: G06Q 10/06, G06Q 50/08

(54) **VERFAHREN ZUR KRANMONTAGE**
METHOD FOR CRANE ASSEMBLY
PROCÉDÉ DE MONTAGE D'UNE GRUE

(30) Priorität: 23.12.2015 DE 102015016856
(43) Veröffentlichungstag der Anmeldung: 31.10.2018
(73) Patentinhaber: Liebherr-Werk Biberach GmbH, 88400 Biberach/Riß (DE)
(72) Erfinder: HOFMEISTER, Markus, 88339 Bad Waldsee (DE); SCHILLING, Herrmann, 88433 Assmannshardt (DE)
(74) Vertreter: Laufhütte, Dieter
(86) Internationale Anmeldenummer: PCT/EP2016/002173
(87) Internationale Veröffentlichungsnummer: WO 2017/108191

(56) Entgegenhaltungen:
- WO-A1-02/067151
- DE-A1- 10 129 209
- DE-A1-102015 006 992
- US-A1- 2011 313 878
- US-A1- 2015 324 940
- US-B1- 8 566 714
- Chih-Hsingchu1 Chu ET AL: "ONLINEPRODUCTCONFIGURATIONINE-COMMERCE WITH3DWEBVIEWINGTECHNOLOGY", , 1. Januar 2005 (2005-01-01), Seiten 225-234225, XP55359933, Gefunden im Internet: URL:https://www.researchgate.net/profile/C hih-Hsing_Chu/publication/26502633_Online_ Product_Configuration_in_e-Commerce_with_3 D_Web_Viewing_Technology/links/5498b6c70cf 2c5a7e342c545.pdf [gefunden am 2017-03-29]

## Beschreibung

Die Erfindung betrifft ein Verfahren zur Krankonfiguration und Kranmontage wenigstens eines Krans.

Vor der Aufnahme des Kranbetriebs muss die benötigte Krankonfiguration geplant werden. Dabei ist insbesondere der erforderliche Informationsaustausch zwischen den Schnittstellen Baustellenplaner, Kunde, Kranhersteller sowie Montagepersonal aufwändig und zeitintensiv. Gewisse Informationen stehen stets nur bestimmten Personen zur Verfügung, werden jedoch oftmals an anderer Stelle benötigt. Für eine reibungslose und vollständige Lieferung und Bereitstellung der Teilkomponenten einer gewünschten Krankonfiguration muss die Krankonfiguration zunächst fehlerfrei an das Montageteam kommuniziert werden. Gerade bei einer hohen Zahl an Sonderkonfigurationen, die zunehmend von der Kundenseite gewünscht sind, ist eine enorme Anzahl unterschiedlicher Kranbauteile von Nöten. Die Komplexität des Aufbaus sowie die Gefahr der Verwechslung nehmen zu.

Nach heutigem Stand wird ein Kran gemäß Herstellervorgaben geplant und aufgebaut. Die verfügbaren und zulässigen Standardkonfigurationen werden dem Kunden mittels Betriebsanleitungen oder Konfigurationsprogrammen mitgeteilt. Sonderkonfigurationen erfordern eine vom Hersteller durchgeführte Statikprüfung. Montageinformationen des konfigurierten Kranes werden dem Montageteam als Zeichnungen übergeben. Während und nach erfolgter Montage ist eine Überprüfung des Kranzustandes sehr zeitintensiv. Der Montagezustand des Krans wird über Skalierdaten und Eingabeparameter mitgeteilt.

Aus der DE 101 29 209 A1 ist ein System zum Konstruieren von CAD-Baugruppen und Produkten über ein Netzwerk bekannt. Hierbei kann der Kunde einzelne Produkte auswählen und entsprechend seinen Wünschen konfigurieren. Die WO 02/067151 A1 offenbart ebenfalls einen Konfigurator, über diesen der Kunde online unterschiedlicher Produkte nach seinen Wünschen konfigurieren kann. Als Beispiel für ein konfigurierbares Produkt wird ein Kranantrieb genannt.

Aus der DE 10 2015 006992 A1 ist eine Lösung zur Auslagerung der ressourcenintesiven Berechnung von Traglasttabellen an eine externe Recheneinheit. Die Kransteuerung teilt dem Rechenzentrum Informationen zum Kran mit und erhält im Gegenzug extern berechneten Traglasttabellen für unterschiedliche Rüstzustände.

Gesucht wird ein verbessertes Verfahren, um den Gesamtprozess der Krankonfiguration mit abschließender Montage zu vereinfachen und sicherer zu gestalten. Wünschenswert ist eine vernetzt strukturierte Kranmontage und Kranbetrieb. Gelöst wird diese Aufgabe durch ein Verfahren gemäß den Merkmalen des Anspruchs 1. Vorteilhafte Ausgestaltungen des Verfahrens sind Gegenstand der abhängigen Ansprüche.

Gemäß Anspruch 1 wird ein Verfahren zur Krankonfiguration und Kranmontage auf Grundlage eines Onlineportals vorgeschlagen. Dieses Onlineportal umfasst wenigstens eine Datenbank mit einer Vielzahl an Standardkrankonfigurationen. Alternativ kann das Onlineportal mit einer entsprechenden externen Datenbank in Verbindung stehen. Zudem sieht das Onlineportal ein Interface für den Benutzerzugang zum Onlineportal vor. Ein Benutzer kann beispielsweise über das Internet bzw. einen Webbrowser auf das Onlineportal und die dort bereitgestellten Krankonfigurationen zugreifen. Alternativ bietet sich ein Zugang zum Onlineportal mittels lokaler auf einem Benutzer-PC installierbarer Softwarepakete an. Grundsätzlich ist der Zugang von jedem beliebigen Kommunikationsgerät, insbesondere Mobilgerät denkbar.

Durch Zugang zum Onlineportal kann ein Krannutzer aus der Vielzahl an Standardkonfigurationen seine individuelle Krankonfiguration für einen anstehenden Bauauftrag virtuell zusammenstellen und die individuelle Krankonfiguration auf dem Onlineportal für die spätere Verwendung speichern. Denkbar ist es auch, dass der Benutzer die Arbeitsanforderungen (Auslegerlänge, Turmhöhe, Last, etc.) eingibt und das Onlineportal eine die Anforderungen erfüllende Standardkonfiguration vorschlägt. Ferner sieht das Onlineportal eine weitere Datenbank bzw. eine Anbindung zu einer weiteren externen Datenbank vor, die eine Reihe von Montageinformationen zu unterschiedlichen Standardkonfigurationen von Kranen vorhält. Das Onlineportal wählt nun anhand der getätigten individuellen Krankonfigurationen die dazu relevanten Montageinformationen aus der Datenbank aus und stellt diese zum Abruf durch ein Montageteam für den Aufbau des Krans bereit.

Der notwendige Informationsaustausch zwischen dem Bereitsteller des Krans bzw. etwaiger Krankomponenten, dem Krannutzer sowie einem Montageteam für die Montage und Rüstung des Krans erfolgt nicht mehr händisch bzw. über separate Informationsquellen und -kanäle, sondern zentralisiert über das zur Verfügung gestellte Onlineportal. Alle notwendigen Informationen lassen sich dezentral von einem beliebigen Ort mittels Zugriff auf das Onlineportal durch jedermann abrufen. Zudem ist sichergestellt, dass dem Montageteam nur die notwendigen Montageinformationen bezüglich der gewünschten Krankonfiguration angezeigt werden. Dies verhindert eine Fehlbedienung bzw. fehlerhafte Montage des Krans aufgrund von Falschinformationen.

Gemäß einer optionalen Erweiterung des Onlineportals kann es vorgesehen sein, dass der Krannutzer zusätzlich zu der Standardkonfiguration etwaige Sonderkonfigurationen eingeben kann und die diesbezügliche Krankonfiguration speichern kann. Erfüllt keine der verfügbaren Standardkonfigurationen die Anforderungen, kann das Onlineportal auch einen Vorschlag für eine passende Sonderkonfiguration unterbreiten. Das Onlineportal wertet die Nutzereingabe bzw. akzeptierte Sonderkonfiguration aus und generiert automatisch eine Anfrage an einen Kranhersteller bezüglich der gewünschten Sonderkonfiguration des Krannutzers. Diese Anfrage wird dem Kranhersteller übermittelt und folglich sieht das Onlineportal wenigstens eine Schnittstelle zum System eines Kranherstellers vor. Der Kranhersteller kann sodann eine Statikprüfung der gewünschten Sonderkonfiguration durchführen und das Ergebnis erneut über das Onlineportal zu der jeweiligen individuellen Krankonfiguration speichern. Ist die gewünschte Sonderkonfiguration statisch unbedenklich, wird die Krankonfiguration durch das Onlineportal freigegeben, insbesondere für den Abruf freigegeben. Sollte die gewünschte Sonderkonfiguration den statischen Erfordernissen nicht entsprechen, kann beispielsweise durch den Kranhersteller bzw. das Onlineportal eine Alternative vorgeschlagen werden, die der Krannutzer ablehnen bzw. akzeptieren kann. Bei Zustimmung kann die alternative Krankonfiguration als freigegebene Krankonfiguration auf dem System hinterlegt werden.

Denkbar ist zudem, dass über wenigstens eine Schnittstelle des Onlineportals ein oder mehrere Kranverleihunternehmen angebunden sind. Idealerweise erfolgt die Anbindung der Kranverleihunternehmen über eine direkte Schnittstelle mit deren ERP-Systemen (Enterprise-Ressource-Planing). Dadurch erhält das Onlineportal mittelbaren Zugriff auf die aktuelle und geplante Verfügbarkeit etwaiger für die jeweilige Krankonfiguration notwendiger Krankomponenten. Das Onlineportal kann folglich eine automatisierte Auswertung vornehmen und feststellen, ob alle für die individuelle Krankonfiguration benötigten Krankomponenten bei wenigstens einem Kranhersteller verfügbar sind. Gegebenenfalls kann vorgesehen sein, dass je nach Verfügbarkeit automatisch ein Angebot für die gewünschte Krankonfiguration von wenigstens einem Kranverleihunternehmen angefragt und im Anschluss automatisiert über das Onlineportal dem Krannutzer unterbreitet werden kann. In diesem Zusammenhang ist es ebenfalls möglich, dass eine folgende Auftragsbestätigung durch den Besteller ebenfalls über das Onlineportal erfolgt.

Gemäß einer weiteren vorteilhaften Ausgestaltung ist es vorstellbar, dass das Montageteam die Verfügbarkeit ein oder mehrerer Krankomponenten bei wenigstens einem Kranverleihunternehmen und/oder Kranhersteller über das Onlineportal prüfen kann. Beispielsweise könnte es sich während des Montagevorgangs herausstellen, dass zusätzliche Krankomponenten benötigt werden bzw. es zu einer geringfügigen Änderung der Krankonfiguration kommt. In diesem Fall ist es denkbar, dass das Montageteam Zugriff auf das Onlineportal hat um für etwaige Krankomponenten die Verfügbarkeit zu prüfen. Denkbar ist es ebenfalls, dass bereits vom Baustellenort aus durch externen Zugriff auf das Onlineportal eine Bestellung über das Onlineportal abgewickelt werden kann. Ferner ist es möglich, diesbezügliche Liefertermine bzw. Lieferzeiten über das Onlineportal aufzurufen.

Die für die Montage bereitgestellten Montageinformationen beinhalten beispielsweise Betriebs- und/oder Montageanleitungen des Krans. Darunter fallen detaillierte Anleitungen und Dokumente zu den jeweiligen Krankomponenten. Ferner ist es möglich, durch das Onlineportal ein Onlineassistenzsystem bereitzustellen bzw. für den Download anzubieten. Ein derartiges Assistenzsystem bietet eine geführte Anleitung der notwendigen Montageprozesse. Beispielsweise umfasst dies etwaige Lernvideos oder eine Schritt-für-Schritt Visualisierung der Montageschritte.

Erfindungsgemäß hat die wenigstens eine Kransteuerung des gemäß der hinterlegten Krankonfiguration zusammengestellten Krans über eine Kommunikationsschnittstelle Zugriff auf das Onlineportal. Das Onlineportal stellt bezüglich der gespeicherten individuellen Krankonfigurationen relevante Steuerungsparameter automatisch und filtriert bereit, sodass diese durch die angebundene Kransteuerung unmittelbar auf den Kran herunterladbar sind. Dadurch muss eine Kransteuerung nach der Kranmontage nicht mehr händisch programmiert werden, sondern dieser Schritt kann automatisiert durch die Anbindung der Kransteuerung an das Onlineportal erfolgen. Zudem muss das Montageteam bzw. der Kranbediener die notwendigen Steuerparameter nicht mehr umständlich selbst heraussuchen, denn bereits dieser vorgelagerte Schritt findet automatisiert im Onlineportal statt.

Die an die Kransteuerung übertragenen bzw. bereitgestellten Steuerungsparameter enthalten vorzugsweise Informationen zur Traglastkurve des Krans (Ausladung, Ballastierung,Traglast), Informationen zum Hubwerk, Drehwerk, Laufkatze (Geschwindigkeiten, Beschleunigungs- und Verzögerungsrampen, Motordaten) als auch Baustellen spezifische Informationen (Arbeitsbereichsbegrenzung, Freigabe der Windfreistellfunktion nur in einem sicheren Bereich). Darunter können Daten zu den aktuellen Platzverhältnissen auf der Baustelle, maximale Anschlussleistungen, Bodenverhältnisse zur Prüfung der Standsicherheit, als auch sonstige Umwelteinflüsse, wie Windgeschwindigkeit, Temperatur, Druckverhältnisse, verfügbare Schnittstellen und Funktionen zum Baustellenleitstand, etc., fallen.

Gemäß der Erfindung überwacht die Kransteuerung den Rüstungsistzustand des Krans während des Montageprozesses. Die Überwachung erfolgt anhand integraler elektronischer Identifizierungsmerkmale (Kennung) der Krankomponenten, die durch die Kransteuerung elektronisch, insbesondere drahtlos, induktiv oder kapazitiv erfassbar sind. Die Kransteuerung erhält dadurch Informationen, welche Krankomponenten bereits vorhanden sind und welche insbesondere bereits fertig montiert sind.

Gemäß der Erfindung werden diese Informationen bezüglich des Rüstungsistzustandes von der Kransteuerung an das Onlineportal übertragen, wo auf Grundlage der empfangenen Informationen eine Plausibilitätsprüfung durch Abgleich der erfassten Krankomponenten mit der gespeicherten individuelle Krankonfiguration ausgeführt wird. Dadurch lassen sich fehlende oder bezüglich der gewünschten Krankonfiguration falsche Krankomponenten erkennen. Wird ein fehlendes bzw. fehlerhaftes Kranbauteil erkannt, so kann beispielsweise durch das Onlineportal automatisiert ein passender Lieferauftrag an wenigstens einen Kranhersteller bzw. Kranverleihunternehmen erstellt und übermittelt werden.

Denkbar ist es auch, durch die Erfassung der elektronischen Identifikationsmerkmale festzustellen, ob die verbauten Krankomponenten tatsächlich echt sind und einer diesbezüglichen Verifizierung standhalten. Durch Verwendung einer individuellen Kennung für die elektronischen Identifikationsmerkmale sind diese fälschungssicher und Plagiate können systemintern erkannt werden. Es besteht die Möglichkeit entsprechende Warnmeldungen seitens der Kransteuerung oder des Onlineportals zu generieren, um den Kranbediener über das Auffinden eines Plagiats in Kenntnis zu setzen.

Durch die Verwendung von elektronischen Identifizierungsmerkmalen ergeben sich weitere Anwendungsmöglichkeiten. Eine automatische Erfassung der Einsatzzeit einer Krankomponente anhand des Identifizierungsmerkmals ist vorstellbar. Die Einsatzzeiten lassen sich komfortable im Onlineportal verwalten und Hinweise für notwendige Wartungen oder auch Prüfungen der Krankomponenten können gegebenenfalls generiert und ausgeben werden. Ferner wird dadurch eine Einsatzzeit bedingte Abrechnung ermöglicht. Die Einsatzzeiten stehen im Onlineportal abrufbar zur Verfügung, diese können aber auch automatisch an ein Kranverleihunternehmen weitergeleitet werden.

Die Übermittlung von für die Krankonfiguration relevanten Informationen kann nicht nur an die Kransteuerung bzw. das Montageteam erfolgen, sondern ebenfalls an etwaige mit dem Onlineportal verbundene Maschinen bzw. Werkzeuge, insbesondere solche, die für die Kranmontage notwendig sind bzw. für den Kranbetrieb üblicherweise Verwendung finden. Denkbar ist es beispielsweise, dass derartige Werkzeuge ein eigenes Kommunikationsmodul umfassen, um mit dem Onlineportal in Kommunikation zu treten. Genauso gut ist eine mittelbare Kommunikation über ein oder mehrere zwischengeschaltete Gateways vorstellbar. Die Maschinen und/oder Werkzeuge können für die Montage relevante Informationen von dem Onlineportal abrufen, so zum Beispiel notwendige Anzugsmomente für hydraulische Drehmomentschlüssel oder Prüfwerte bzw. Geräteeinstellungen für Messgeräte.

Für die Kommunikation mit dem Onlineportal ist es wünschenswert, dass der Kran einen entsprechenden Accesspoint vorsieht, der eine unmittelbare Anbindung des Krans an das Onlineportals gestattet. Ebenso können Werkzeuge oder sonstige Kommunikationsmittel des Montagepersonals den Accesspoint des Krans nutzen.

Ferner ist es wünschenswert, Autorisierungsmittel am Kran für den autorisierten Zugriff einzelner Nutzer, insbesondere Teammitglieder des Montageteams, auf das Onlineportal vorzusehen. Neben dem gesteuerten Zugriff auf das Onlineportal bietet dies zudem die Möglichkeit, Angebote des Onlineportals nutzerspezifisch zu gestalten. Konfigurationsparameter des Krans lassen sich hierdurch durch das Onlineportal benutzerspezifisch filtern und zur Verfügung stellen. Beispielsweise hat ein einzelnes Teammitglied des Montageteams nur begrenzten Zugang auf alle für die Krankonfiguration relevanten Konfigurationsparameter, während andere Mitglieder einen erweiterten Zugriff haben sollen. Neben dem reinen Zugriff kann auch die Modifikation etwaiger Kranparameter benutzerindividuell gestaltet sein.

Denkbar ist es auch, dass sich einzelne Steuerbefehle für den Kranbenutzer spezifisch freischalten lassen. Als Beispiel sei die Steuerung der Heizung innerhalb der Kranführerkabine genannt, die sich durch die Mitglieder des Montageteams aktivieren lässt, d.h. für diese Benutzertypen freigeschaltet ist. Die Autorisierung der einzelnen Mitglieder des Montageteams kann daneben auch dazu genutzt werden, die Arbeitszeiten des Montageteams zu erfassen und an das Onlineportal zu übertragen.

Weiterhin ist es vorstellbar, dass wenigstens ein mobiles Kommunikationsgerät, welches Ortungsmittel umfasst, beispielsweise GPS, mit dem Kran und/oder dem Onlineportal verbindbar ist. Dies ermöglicht es, dass der Kranbenutzer vor der Aufnahme des Kranbetriebes den Kranarbeitsbereich mit dem Kommunikationsgerät abläuft und die durch das Kommunikationsgerät erfassten Ortungsdaten an das Onlineportal übertragen werden. Dadurch lässt sich der mögliche Arbeitsbegrenzungsbereich des Krans automatisch ermitteln und für die notwendige Krankonfiguration und/oder Kransteuerung innerhalb des Onlineportals berücksichtigen.

Neben dem erfindungsgemäßen Verfahren betrifft die vorliegende Erfindung ein Onlineportal zur Krankonfiguration und Kranmontage wenigstens eines Krans, wobei sich das Onlineportal durch Mittel auszeichnet, die eine Durchführung des erfindungsgemäßen Verfahrens bzw. eine vorteilhafte Ausgestaltung des erfindungsgemäßen Verfahrens ermöglichen. Das Onlineportal zeichnet sich folglich durch dieselben Vorteile und Eigenschaften aus, wie sie bereits anhand des erfindungsgemäßen Verfahrens erläutert wurden. Auf eine wiederholende Beschreibung kann aus diesem Grund verzichtet werden.

Weitere Vorteile und Eigenschaften der Erfindung sollen im Folgenden anhand eines in den Figuren dargestellten Ausführungsbeispiels näher erläutert werden.

Es zeigen:
- Figur 1:: einen Screenshot des erfindungsgemäßen Onlineportals;
- Figur 2:: eine erläuternde schematische Blockdarstellung des erfindungsgemäßen Onlineportals;

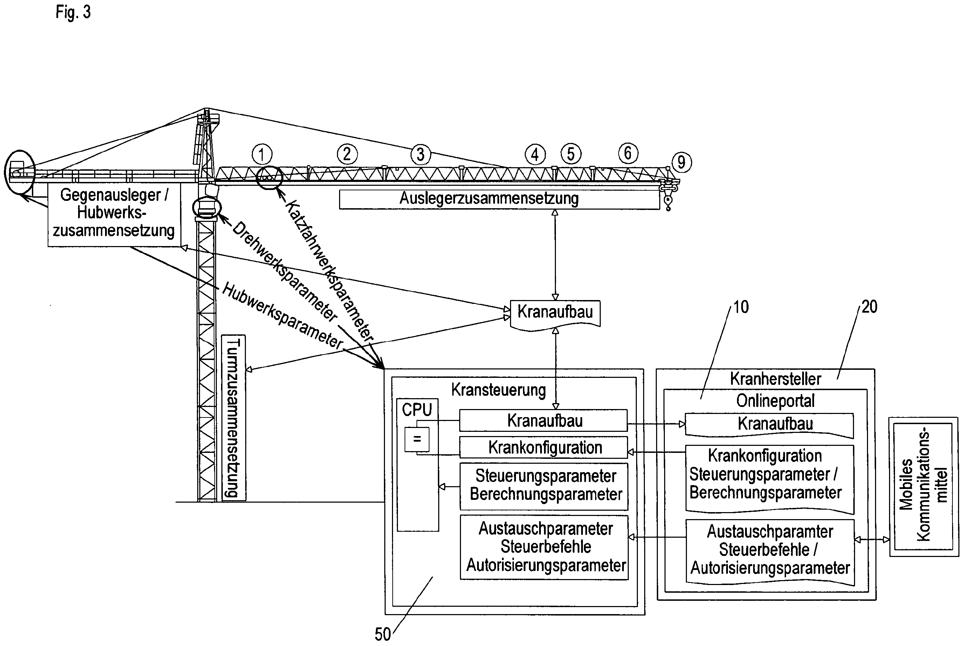

- Figur 3:: eine schematische Darstellung der Schnittstelle zwischen Onlineportal und Kransteuerung und
- Figur 4:: ein exemplarisches Flussdiagramm für den erfindungsgemäßen Prozess zur Krankonfiguration und Kranmontage eines Krans.

Zu Beginn sollen zunächst detaillierte Einzelheiten des erfindungsgemäßen Verfahrens bzw. des Onlineportals anhand der Kranmontage bzw. des Kranbetriebes näher erläutert werden.

### Kranmontage

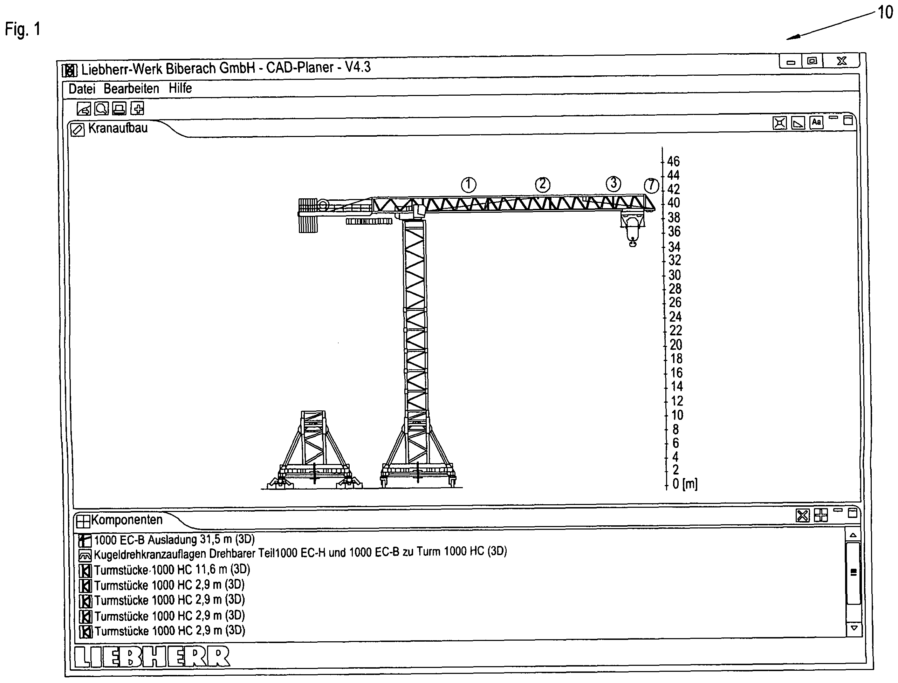

Über ein Onlineportal 10 oder einer Software auf dem PC des Kunden 1 besteht die Möglichkeit die gewünschte Krankonfiguration zusammenzustellen. Als Beispiel wird in Figur 1 ein Screenshot der Konfigurationsumgebung des Onlineportals 10 dargestellt. Der Kunde 1 erhält graphische Unterstützung bei der Krankonfiguration. Dabei werden dem Kunden sämtliche verfügbaren Standardkonfigurationen angeboten. Er kann den Kran nach seinen Anforderungen zusammenstellen und anschließend die CAD-Daten des Kranaufbaus ausleiten.

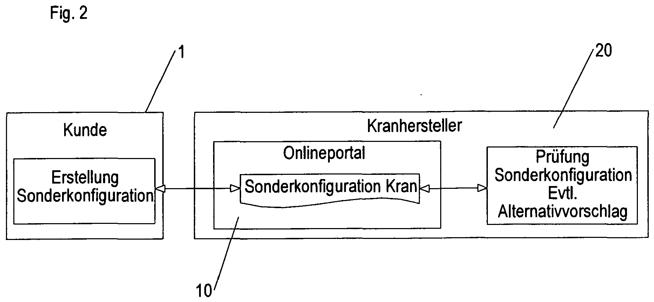

Besteht die Notwendigkeit einer Sonderkonfiguration des Kranaufbaus, gibt dies dem Kunden 1 die Möglichkeit, diese direkt über das Onlineprotal 10 zum Kranhersteller 20 zu senden, wie dies schematisch in Figur 2 angedeutet ist. Beim Kranhersteller 20 erfolgt dann eine Statikprüfung der Sonderkonfiguration. Kann die Konfiguration nicht realisiert werden, kann der Kranhersteller 20 über das Onlineportal 10 ein Alternativvorschlag zukommen lassen.

Kranverleihunternehmen 30 können im Onlineportal 10 ihre Geräte- sowie Komponentenausnutzung verwalten. Ebenfalls besteht die Möglichkeit über eine Onlineportalschnittstelle zum ERP-System 31 des Kranverleihunternehmens 30, die Verfügbarkeit der Komponenten online zu erfassen. Dadurch besteht die Möglichkeit, dass das Montagepersonal die Verfügbarkeit der Teile abfragt, sowie notwendige Komponenten (z.B. ein Turmsegment) zur Baustelle ordern oder reservieren kann. Liefertermine sowie Lieferstatus von Komponenten auf dem Weg zur Baustelle können über das Portal verwaltet sowie abgefragt werden.

Kranverleihunternehmen 30 können ihren Fuhrpark im Onlineportal 10 offen legen. Dadurch besteht die Möglichkeit, dass der Kunde 1 eine Auswahl von Kranverleihunternehmen 30 vorgeschlagen bekommt, die die gewünschte Krankonstellation bereits vorrätig haben. Über das Portal 10 wird dem Kranverleihunternehmen 30 eine automatisierte Angebots- sowie Bestellabwicklung über die gesamte Krankonfiguration sowie über fehlende Komponenten mit dem Kranhersteller 20 ermöglicht. Notwendige Wartungstermine sowie Hinweise der betroffen Komponenten werden im Onlineportal 10 verwaltet sowie dem Ausführenden mitgeteilt. Prüfwerte als auch Prüfdaten werden im Onlineportal 10 erfasst sowie verwaltet. Zusätzlich können Hinweise sowie Zustände (z.B. Beschädigt, Lieferung) einzelner Komponenten online abgelegt werden. Es besteht auch die Möglichkeit eigene Zustände zu definieren, um eine flexiblere Verwaltung für alle Kranverleihunternehmen zu erhalten.

Die vom Kranverleih 30 festgelegt und vom Hersteller 20 abgenommene Krankonfiguration wird im Onlineportal 10 abgelegt. Über mobile- oder stationäre Kommunikationsmittel kann das Montagepersonal 40 Informationen über die Krankonfiguration sowie über die Montage abfragen. E-Learning sowie Videos simulieren und verdeutlichen die Kranmontage und weisen auf Gefahrensituationen hin. Die dem Anwender zur Verfügung stehende Informationen werden der Krankonfiguration angepasst, somit bleibt die Übersicht erhalten. Ein Assistenzsystem führt über moderne Kommunikationsmittel das gesamte Montageteam 40 durch die Kranmontage. Der kranspezifische Zugriff erfolgt über die Eingabe der Werknummer sowie Codes die von mobilen Kommunikationsmitteln gescannt werden können.

Ein WLAN-Accesspoint im Kran ermöglicht ebenfalls den Zugriff aufs Onlineportal 10 sowie auf die Kransteuerung 50. Sämtliche notwendige Parameter z.B. Skalierdaten, aktuelle Ausladung, Parameter von Busteilnehmern können über das Onlineportal oder über den WLAN-Accesspoint abgerufen und verändert werden. Vor dem Kranaufbau kann aus dem Onlineportal eine Werkzeugliste ausgeleitet werden.

Werkzeuge (z.B. elektrische Schrauber, Hydraulikschrauber) können ebenfalls über eine Verlinkung (WLAN, UMTS) ihre Parameter aus dem Onlineportal 10 erhalten (z.B. Anzugsmomente, Prüfdruck). Ebenfalls werden die ausgeführten Parameter vom Werkzeug überprüft und ebenfalls im Onlineportal 10 abgelegt. Dadurch ist nach, sowie während der Montage nachvollziehbar, welche Montageschritte bereits ausgeführt wurden und mit welchem Moment z.B. Schrauben angezogen wurden.

Die Kransteuerung 50 ist mit dem Onlineportal 10 verlinkt. Dadurch ist die Kransteuerung 50 in der Lage den Kranaufbau zu überwachen sowie die Schnittstelle zum Onlineportal 10 zu realisieren. Kodierungen in den Komponenten, die elektronisch, über Funk, induktiv oder kapazitiv erfasst werden können, ermöglichen den Istzustand der Krankonfiguration zu erfassen. Fehlende Komponenten werden angezeigt und können ausgeleitet oder sogar direkt beim Kranverleihunternehmen 30 oder sogar beim Kranhersteller 20 bestellt werden. Der Istzustand der Krankonfiguration wird ebenfalls im Portal abgelegt. Bei der Erfassung der Komponenten wird die Richtigkeit sowie die Echtheit (Plagiat?) überprüft. Aufgrund der Onlineverwaltung der Komponenten wird das Kranverleihunternehmen 30 bei der Planung eines Einsatzes darauf hingewiesen, welche Komponenten vor, während oder nach dem Kraneinsatz gewartet, überprüft oder abgenommen (z.B. TÜV) werden müssen. Dem Montagepersonal 40 wird ermöglicht, Notizen oder Kommentare zu Komponenten oder Montageschritte hinzuzufügen.

Während oder am Ende der Montage kann ein zertifizierter Montagebericht mit zertifizierten Prüfwerten ausgeleitet werden. Dadurch kann die Abnahme durch bestimmte Institutionen vereinfacht werden. Das Klettersystem des Krans ist ebenfalls mit der Kransteuerung verbunden. Das Klettersystem gibt Informationen über den Aufbau an das Montagepersonal 40 weiter und überprüft ebenfalls die eingebauten Komponenten auf Richtigkeit sowie Echtheit.

### Kranbetrieb

Über die Verlinkung von Kransteuerung 50 zum Onlineportal 10 wird ein Austausch von relevanten Parametern ermöglicht. Dadurch entsteht eine zentrale Verwaltung von krankonfigurationsabhängigen Steuerungsparametern. Der im Onlineportal 10 abgelegten Krankonfiguration werden Parameter für die Kransteuerung 50 hinterlegt. In der Kransteuerung 50 ist nur noch eine Krankonfiguration abgelegt, die der Kransteuerung 50 über das Onlineportal 10 zugewiesen wird. Die Verwaltung erfolgt über die Werknummer. Die Parameter erhalten z.B. Informationen zur Traglastkurve (Ausladung Traglast), Informationen zum Hubwerk, Drehwerk, Katze (Geschwindigkeiten, Beschleunigungs- und Verzögerungsrampen, Motordaten) sowie baustellenspezifische Informationen (maximale Anschlussleistung, Arbeitsbereichsbegrenzung, Freigabe der Windfreistellfunktion nur in einem sicheren Bereich). Aufgrund der Parameter kann auch eine Plausibilitätsprüfung der Skalier- sowie Konfigurationsdaten erfolgen. z.B. wird erkannt, wenn ein falsches Hubwerk eingebaut wurde. Ebenfalls werden auch konfigurationsabhängige Berechnungsparameter, wie z.B. Parameter für die Dynamikkompensation des Stahlbaus, der Kransteuerung mitgeteilt. Diese Parameter können durch den Kranhersteller 20 aktualisiert und geprüft werden, wodurch ständige Optimierungen der Kransteuerung 50 durchgeführt werden können. Ebenfalls wird verhindert, dass fälschliche Parameter eingegeben wurden. Es besteht auch die Option eines kompletten Softwareupdates der Kransteuerung 50. Dies wird dem Kranmontage- wie Bedienpersonal 40, 1 mitgeteilt, sofern ein Update verfügbar ist.

Das Bedien- sowie Montagepersonal 1, 40 kann sich am Kran autorisieren. Dies geschieht über die Eingabe von Benutzername und Passwort oder durch das Einlesen einer Autorisierungskarte oder mobile Kommunikationsmittel. Über Benutzergruppen, z.B. Bediener, Monteur, können bestimmte Parameter zum Verändern freigegeben werden. Z.B. kann ein Monteur die Zeit der Zentralschmierintervalle anpassen, ein Bediener jedoch nur die Kransteuerung im freigegebenen Bereich seinen Bedürfnissen anpassen. Dadurch kann Manipulation ausgeschlossen werden. Die Anzeigeelemente (Menüführung in Displays, Onlineportal) werden den Gruppierungen angepasst. Dadurch können bestimmte Funktionen auch aktiviert und deaktiviert werden.

Aufgrund der Autorisierung können Arbeitszeiten vom Personal sowie Maschinennutzungszeiten erfasst oder verrechnet werden. Diese können über Schnittstellen zu den einzelnen Verwaltungssoftwaren (ERP 31, Personalmanagement) zu den Kranverleihunternehmen 30, übermittelt werden.

Über das Onlineportal 10 können freigegebene Steuerbefehle an die 'Kransteuerung 50 erteilt werden. Dadurch besteht die Möglichkeit über mobile Kommunikationsmittel bestimmte Steuerbefehle tätigen zu können. Z.B. kann die Zeitschaltung der Kabinenheizung eingestellt werden, oder es werden Arbeitsbegrenzungsbereiche mit einem mobilen Kommunikationsmittel mit GPS Empfänger abgelaufen und die GPS-Koordinaten werden direkt im Onlineportal 10 abgelegt. Das Onlineportal 10 übergibt die Arbeitsbegrenzungsbereiche direkt an die Kransteuerung 50. Ebenfalls besteht die Möglichkeit, diese über den WLAN-Accesspoint am Kran direkt der Kransteuerung 50 mitzuteilen. Ebenfalls kann auch der Kran über ein mobiles Kommunikationsmittel und dessen GPS-Koordinaten gerufen werden. Das bedeutet, dass die Koordinaten des mobilen Kommunikationsmittels der Kransteuerung 50 mitgeteilt werden und diese der Kranhaken direkt an diese GPS-Position steuert. Ebenfalls können auch freigegebene Fahrbefehle über ein mobiles Kommunikationsmittel getätigt werden.

Des weiteren können auch spezielle, optionale Kranfunktionen über das Onlineportal freigeschaltet werden, eventuell auch nur zeitbegrenzt.

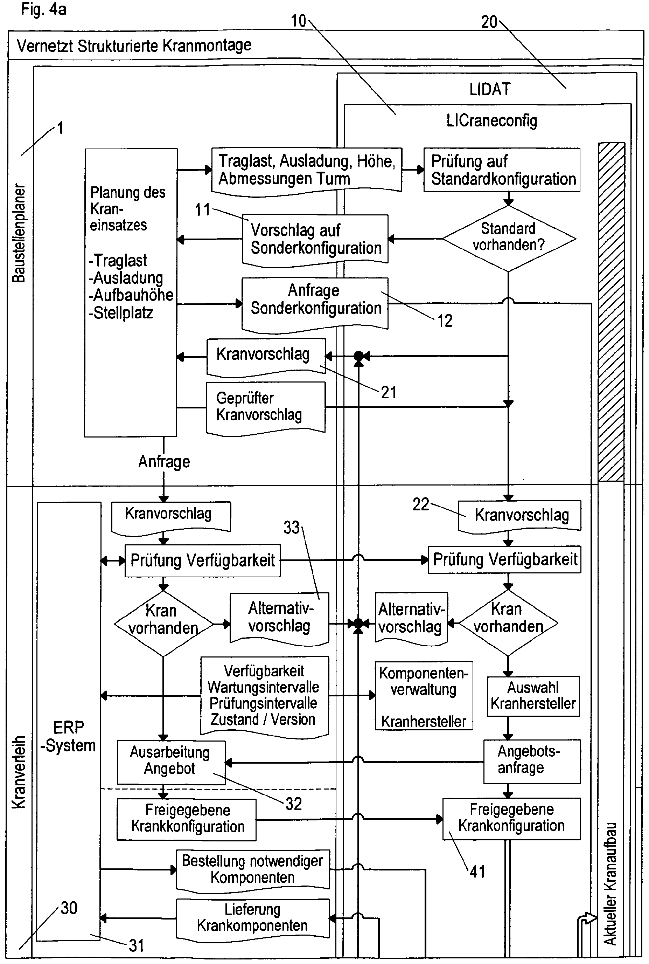

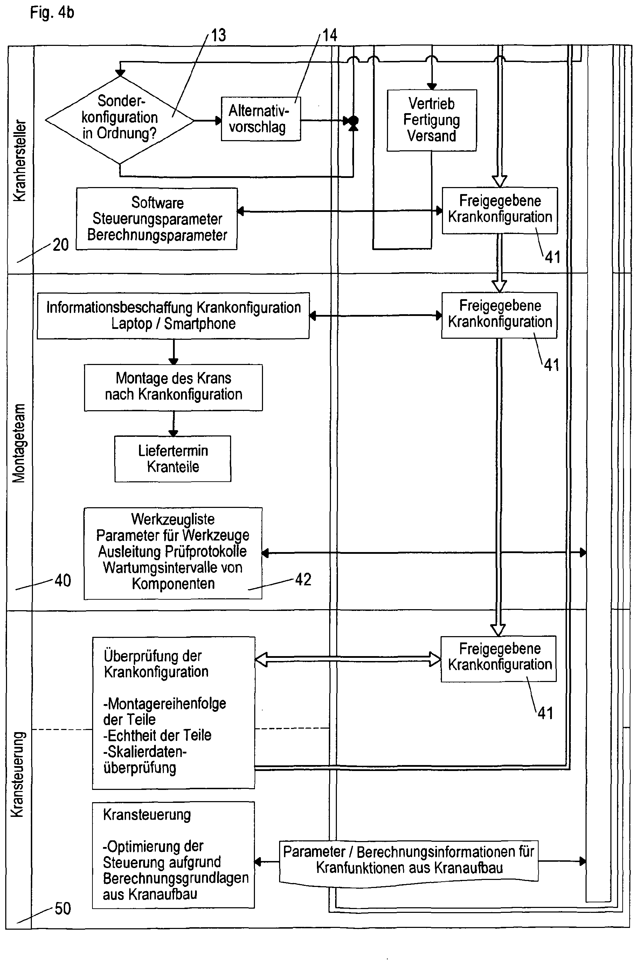

Eine exemplarische Darstellung eines möglichen Ablaufs eines Krankonfigurations- bzw. Montageprozesses soll nunmehr anhand der Blockdarstellung der Figur 4 erläutert werden. Auf der rechten Seite ist das als "LiCraneconfig" bezeichnete Onlineportal 10 ersichtlich. Dies kann beispielsweise in eine Umgebung des Kranherstellers 20, wie beispielsweise das "LIDAT-System" zum allgemeinen Flottenmanagement, eingebettet sein. Auf der linken Seite sind einzelne Kommunikationskomponenten aufgeführt, die über entsprechende Schnittstellen mit dem Onlineportal 10 kommunizieren.

Im ersten Schritt beginnt der Kranbenutzer bzw. der Baustellenplaner 1 die benötigte Krankonfiguration über das Onlineportal 10 einzugeben. Dabei werden insbesondere Informationen wie die Traglast, Ausladung, Höhe, Abmessung des Turms bzw. des Stellplatzes an das Onlineportal 10 übertragen. Das Onlineportal 10 prüft nun automatisch, ob sich mit den gewünschten Betriebsparametern eine Standartkonfiguration einsetzen lässt. Ist eine Standardkonfiguration für die Betriebsanforderungen geeignet, unterbreitet das Onlineportal 10 dem Baustellenplaner 1 einen Kranvorschlag 21, den dieser akzeptieren kann. Auf Grundlage des akzeptierten Kranvorschlags 22 wird dann die Verfügbarkeit des Krans bei den Kranverleihunternehmen 20 geprüft.

Lassen sich die Anforderungen durch keine verfügbare Standardkonfiguration bedienen, erstellt das Onlineportal 10 automatisiert einen Vorschlag 11 für eine Sonderkonfiguration. Diese Sonderkonfiguration kann dann von dem Baustellenplaner 1 bestätigt werden, wobei das Onlineportal 10 sodann eine entsprechende Anfrage an den Kranhersteller 20 stellt. Die Sonderkonfiguration 12 wird dann seitens des Kranherstellers 20 einer Statiküberprüfung unterzogen (Block 13) und dem Nutzer als Kranvorschlag 21 unterbreitet bzw. stattdessen ein Alternativvorschlag 14 zurück ans Onlineportal 10 übertragen. Wird einer dieser Kranvorschläge vom Baustellenplaner 1 akzeptiert so wird die Konfiguration 22 auf Verfügbarkeit geprüft.

Im Einzelnen wird geprüft, ob die benötigten Komponenten für den Kranvorschlag 21 bei wenigstens einem Kranverleiher 30 verfügbar sind. Diese Prüfung kann über eine Schnittstelle mit dem Kranverleiher 30 bzw. eine direkte Anbindung mit dem ERP-System 31 erfolgen. Ist der Kran mit den notwendigen Komponenten gemäß der Krankonfiguration 22 vorhanden, kann ein entsprechendes Angebot 32 angefragt und erstellt werden. Sind die jeweiligen Krankomponenten nicht vollständig verfügbar, wird ein Vorschlag für ein Alternativangebot 33 unterbreitet, das dem Baustellenplaner 1 als Kranvorschlag 21 unterbreitet wird. Wird letztendlich eine verfügbare Krankonfiguration gefunden, kann nach entsprechender Angebotsannahme die individuelle Krankonfiguration 41 freigegeben und im Onlineportal 10 abrufbar gespeichert werden.

Für die freigegebene Krankonfiguration 41 wird gleichzeitig die Komponentenverwaltung 35 aktiviert, die Informationen zur Verfügbarkeit, Wartungsintervallen, Prüfintervallen und Zustand/Version der verwendeten Krankomponenten für die individuelle Krankonfiguration im Onlineportal 10 bereithält. Mit dem angenommen Verleihvertrag wird automatisiert die Bestellung der notwendigen Komponenten in die Wege geleitet, Informationen zur Lieferung der bestellten Komponenten sind über das Onlineportal 10 abrufbar.

Die freigegebene Krankonfiguration 41 befindet sich zu jeder Zeit abrufbar im Onlineportal 10, sodass ein Montageteam 40 über Kommunikationsmittel wie Laptops bzw. Smartphones direkten Zugriff auf die Krankonfiguration 41 einerseits und dafür relevante Montageanleitungen andererseits erhält. Zudem wird eine Liste an benötigten Werkzeugen 42 und damit einhergehender Parameter für die Konfiguration der Werkzeuge erstellt und bereitgestellt. Ergänzend werden Prüfprotokolle für die Endabnahme des montierten Krans sowie notwendige Wartungsintervalle der verbauten Krankomponenten mitgeteilt.

Bereits während der Montage des Krans kann die Kransteuerung 50 mit dem Onlineportal 10 kommunikativ verbunden werden. Die Kransteuerung 50 nimmt bereits während der Montage eine Überprüfung der Krankonfiguration vor, indem die einzelnen verbauten Krankomponenten über elektronische Identifizierungsmerkmale erkannt werden und der aktuelle Istzustand dem Onlineportal 10 mitgeteilt wird. Dadurch lässt sich die Montagereihenfolge der Krankomponenten zurückverfolgen. Weiterhin besteht die Möglichkeit, anhand der Identifizierungsmerkmale die Echtheit der Teile zu bestimmen und eine Skalierdatenüberprüfung vorzunehmen. Das Ergebnis wird dann ans Onlineportal 10 übermittelt, wo der aktuelle Kranaufbau 41 dokumentiert und gespeichert ist.

Zuletzt erstellt das Onlineportal 10 eine Zusammenstellung der notwendigen Steuerungsparameter für die Kransteuerung 50 und startet deren Übertragung an die Kransteuerung 50. Anhand der Berechnungsgrundlagen zur Krankonfiguration kann zu jeder Zeit eine Optimierung der Kransteuerung 50 erfolgen.

## Patentansprüche

1. Verfahren zur Krankonfiguration und Kranmontage auf Grundlage eines Onlineportals, das wenigstens eine Datenbank mit einer Vielzahl an Standardkrankonfigurationen vorhält oder mit dieser in Verbindung steht und mit einem Interface für den Benutzerzugang zum Onlineportal, wobei ein Krannutzer aus der Vielzahl an Standardkonfigurationen seine individuelle Krankonfiguration virtuell zusammenstellt und die individuelle Krankonfiguration auf dem Onlineportal gespeichert wird, wobei wenigstens eine weitere Datenbank des Onlineportals bzw. eine extern angebundene Datenbank Montageinformationen zu der gespeicherten individuellen Krankonfiguration bereithält, das Onlineportal die bezüglich der gespeicherten Krankonfiguration relevanten Montageinformationen filtert und zum Abruf durch ein Montageteam bereitstellt und dass wenigstens eine Kransteuerung eines gemäß der hinterlegten Krankonfiguration zusammengestellten Krans über eine Kommunikationsschnittstelle Zugriff auf das Onlineportal hat und das Onlineportal bezüglich der hinterlegten Krankonfiguration relevante Steuerungsparameter bereithält, die durch die Kransteuerung des Krans abgerufen werden, wobei die Kransteuerung den Rüstungsistzustand des Krans während des Montageprozesses anhand elektronischer Identifizierungsmerkmale der Krankomponenten, die durch die Kransteuerung elektronisch erfassbar sind, überwacht und den Rüstungsistzustand an das Onlineportal weiterleitet und seitens des Onlineportals eine Plausibilitätsprüfung der verbauten Krankomponenten durch Abgleich des empfangenen Rüstungsistzustandes mit der gespeicherten individuellen Krankonfiguration ausgeführt wird.

2. Verfahren nach Anspruch 1, **dadurch gekennzeichnet, dass** der Kranbediener über das Onlineportal ein oder mehrere Sonderkonfiguration für eine Krankonfiguration zusammenstellen kann und die wenigstens eine gewünschte Sonderkonfiguration durch das Onlineportal automatisiert zu wenigstens einem Kranhersteller zur Statiküberprüfung der Sonderkonfiguration übermittelt wird.

3. Verfahren nach einem der vorhergehenden Ansprüche, **dadurch gekennzeichnet, dass** über eine Schnittstelle des Onlineportals ein oder mehrere Kranverleihunternehmen angebunden sind, vorzugsweise unter Einbindung eines ERP-Systems der Kranverleihunternehmen, und für eine gespeicherte Krankonfiguration geprüft wird, ob der Kran mit der gewünschten Konfiguration bei wenigstens einem Kranverleihunternehmen verfügbar ist, wobei gegebenenfalls automatisch ein Angebot für die gewünschte Krankonfiguration von wenigstens einem Kranverleihunternehmen erstellt und über das Onlineportal dem Krannutzer unterbreitet wird, und eine Auftragsbestätigung vorzugsweise über das Onlineportal erfolgen kann.

4. Verfahren nach einem der vorhergehenden Ansprüche, **dadurch gekennzeichnet, dass** das Montageteam die Verfügbarkeit ein oder mehrerer Krankomponenten bei wenigstens einem Kranverleihunternehmen und/oder Kranhersteller prüfen kann und/oder notwendige Krankomponenten automatisiert über das Onlineportal zur Baustelle ordern kann und/oder diesbezügliche Liefertermine und/oder Lieferzeiten über das Onlineportal abrufen kann.

5. Verfahren nach einem der vorhergehenden Ansprüche, **dadurch gekennzeichnet, dass** die über das Onlineportal bereitgestellten Montageinformationen Betriebs- und/oder Montageanleitungen umfassen und/oder ein Assistenzsystem für einen geführten Montageprozess darstellen.

6. Verfahren nach einem der vorhergehenden Ansprüche, **dadurch gekennzeichnet, dass** die Steuerungsparameter Informationen zur Traglastkurve des Krans, Informationen zum Hubwerk, Drehwerk, Laufkatze sowie baustellenspezifische Informationen beinhalten.

7. Verfahren nach einem der vorstehenden Ansprüche, **dadurch gekennzeichnet, dass** fehlende bzw. fehlerhafte Krankomponenten erkannt werden und gegebenenfalls ein Lieferauftrag an wenigstens einen Kranhersteller und/oder ein Kranverleihunternehmen erstellt und übermittelt wird.

8. Verfahren nach einem der vorhergehenden Ansprüche, **dadurch gekennzeichnet, dass** die Kransteuerung die Einsatzzeiten der Krankomponenten erfasst und/oder deren Echtheit prüft und das Ergebnis an das Onlineportal übermittelt, wobei das Onlineportal die Benutzungszeiten verwaltet und gegebenenfalls Hinweise für notwendige Wartungen und/oder Prüfungen der Krankomponenten generiert und ausgibt.

9. Verfahren nach einem der vorhergehenden Ansprüche, **dadurch gekennzeichnet, dass** ein oder mehrere Montagewerkzeuge oder Werkzeuge für den Betrieb des Krans über ein Kommunikationsmodul auf das Onlineportal zugreifen können, um von dort notwendige Informationen für die Werkzeugbedienung bezüglich der Krankonfiguration abzurufen, beispielsweise notwendige Anzugsmomente für Schraubverbindungen oder Prüfwerte für Messgeräte.

10. Verfahren nach einem der vorhergehenden Ansprüche, **dadurch gekennzeichnet, dass** sich der Kranbediener und/oder das Montageteam über Autorisierungsmittel des Krans am Onlineportal autorisieren kann, wobei das Onlineportal Konfigurationsparameter des Krans benutzerspezifisch filtert und zur Verfügung stellt und/oder eine benutzerindividuelle Modifikation etwaiger Kranparameter freigibt und deren Übertragung an die Kransteuerung zulässt und/oder Steuerbefehle für den Kran benutzerspezifisch freischaltet und/oder Arbeitszeiten des Montageteams anhand der Autorisierungszeitpunkte erfasst und gegebenfalls an ein Kranverleihunternehmen weiterleitet.

11. Verfahren nach Anspruch 10, **dadurch gekennzeichnet, dass** ein mobiles Kommunikationsgerät mit Ortungsmitteln mit dem Kran und/oder Onlineportal verbindbar ist, der Kranarbeitsbereich mit dem Kommunikationsgerät abgelaufen wird und die durch das Kommunikationsgerät erfassten Ortungsdaten an das Onlineportal übertragen werden, um den möglichen Arbeitsbegrenzungsbereich des Krans zu ermitteln und für die Krankonfiguration und/oder Kransteuerung zu berücksichtigen.

12. Onlineportal zur Krankonfiguration und Kranmontage wenigstens eines Krans zur Durchführung des Verfahrens gemäß einem der vorhergehenden Ansprüche.

## Claims

1. Method for crane configuration and crane assembly on the basis of an online portal, which holds at least one database with a plurality of standard crane configurations or which is connected to the database, and with an interface for the user access to the online portal, wherein a user of the crane virtually composes their individual crane configuration from the plurality of standard configurations, and the individual crane configuration is stored on the online portal, wherein at least one further database of the online portal, or an externally linked database, holds assembly information about the stored individual crane configuration, the online portal filters the assembly information relevant in regard to the stored crane configuration, and provides it for retrieval by an assembly team and in that at least one crane control of a crane composed in accordance with the stored crane configuration has access to the online portal via a communication interface, and the online portal holds control parameters relevant to the stored crane configuration, which are retrieved by the crane control of the crane, wherein the crane control monitors the current set-up state of the crane during the assembly process based upon electronic identification features of the crane components, which can be electronically detected by the crane control and forwards the current set-up state to the online portal and a plausibility check of the installed crane components occurs on part of the online portal by comparing the received current set-up state with the stored individual crane configuration.

2. Method according to claim 1, **characterized in that** using the online portal, the crane operator can compose one or multiple special configurations for a crane configuration, and the at least one desired special configuration is transmitted to at least one crane manufacturer in an automated manner through the online portal for a static equilibrium check of the special configuration.

3. Method according to one of the preceding claims, **characterized in that** one or multiple crane rental companies are linked via an interface of the online portal, preferably by integrating an ERP system of the crane rental companies, and a check is performed for a stored crane configuration as to whether the crane having the desired configuration is available with at least one crane rental company, wherein an offer for the desired crane configuration is generated by at least one crane rental company in an automated manner, as the case may be, and submitted to the crane user via the online portal, and an order confirmation can preferably occur through the online portal.

4. Method according to one of the preceding claims, **characterized in that** the assembly team can check the availability of one or multiple crane components with at least one crane rental company and/or crane manufacturer, and/or can order required crane components to the construction site through the online portal in an automated manner, and/or call-up respective delivery dates and/or delivery periods via the online portal.

5. Method according to one of the preceding claims, **characterized in that** assembly information provided via the online portal include operating and/or assembly instructions and/or represent an assistance system for a guided assembly process.

6. Method according to one of the preceding claims, **characterized in that** the control parameters include information on the bearing load curve of the crane, information on the lifting unit, rotary mechanism, trolley, as well as site-specific information.

7. Method according to one of the preceding claims, **characterized in that** missing or faulty crane components are detected and, as the case may be, a delivery order to at least one crane manufacturer and/or crane rental company is generated and transmitted.

8. Method according to one of the preceding claims, **characterized in that** the crane control detects the operating periods of the crane components and/or checks their authenticity and transmits the results to the online portal, wherein the online portal manages the operating periods and, as the case may be, generates and outputs notes about required maintenance and/or checks of the crane components.

9. Method according to one of the preceding claims, **characterized in that** one or multiple assembly tools or tools for the operation of the crane can access the online portal via a communication module, in order to call-up required information for operating the tool in regard to the crane configuration, for example required tightening moments for screw connections or test values for measuring equipment.

10. Method according to one of the preceding claims, **characterized in that** the crane operator and/or the assembly team can authenticate themselves at the online portal via authorization means of the crane, wherein the online portal filters and provides configuration parameters of the crane in a user-specific manner, and/or approves a user-individual modification of possible crane parameters and allows their transmission to the crane control, and/or approves control commands for the crane in a user-specific manner and/or detects hours of work of the assembly team based upon authentication times and, as the case may be, forwards them to a crane rental company.

11. Method according to claim 10, **characterized in that** a mobile communication device having positioning means can be connected to the crane and/or the online portal, the crane working region is walked with the communication device and the positioning data detected by the communication device is transmitted to the online portal, in order to determine the possible area of restricted operability of the crane and consider it for the crane configuration and/or crane control.

12. Online portal for crane configuration and crane assembly of at least one crane for performing the method according to one of the preceding claims.

## Revendications

1. Procédé de configuration de grue et de montage de grue sur la base d'un portail en ligne qui tient à disposition au moins une base de données avec une pluralité de configurations de grue standard ou qui est en liaison avec celle-ci et avec une interface pour l'accès de l'utilisateur au portail en ligne, un utilisateur de grue composant virtuellement sa configuration de grue individuelle à partir de la pluralité de configurations standard et la configuration de grue individuelle étant mémorisée sur le portail en ligne, au moins une autre base de données du portail en ligne ou une base de données reliée de manière externe mettant à disposition des informations de montage relatives à la configuration de grue individuelle mémorisée, le portail en ligne filtrant les informations de montage pertinentes par rapport à la configuration de grue mémorisée et les mettant à disposition pour la consultation par une équipe de montage et au moins une commande de grue d'une grue assemblée selon la configuration de grue enregistrée ayant accès au portail en ligne par l'intermédiaire d'une interface de communication et le portail en ligne mettant à disposition des paramètres de commande pertinents par rapport à la configuration de grue enregistrée, qui sont consultés par la commande de grue de la grue, la commande de grue surveillant l'état réel d'équipement de la grue pendant le processus de montage à l'aide de caractéristiques d'identification électroniques des composants de la grue, qui peuvent être détectées électroniquement par la commande de grue, et transmettant l'état réel d'équipement au portail en ligne, et le portail en ligne effectuant un contrôle de plausibilité des composants de grue montés en comparant l'état réel d'équipement reçu avec la configuration de grue individuelle mémorisée.

2. Procédé selon la revendication 1, **caractérisé en ce que** l'opérateur de la grue peut composer, par l'intermédiaire du portail en ligne, une ou plusieurs configurations spéciales pour une configuration de grue et l'au moins une configuration spéciale souhaitée est transmise automatiquement par le portail en ligne a au moins un fabricant de grues pour la vérification statique de la configuration spéciale.

3. Procédé selon l'une quelconque des revendications précédentes, **caractérisé en ce qu'**une ou plusieurs entreprises de location de grues sont reliées par l'intermédiaire d'une interface du portail en ligne, de préférence avec l'intégration d'un système ERP des entreprises de location de grues, et, pour une configuration de grue mémorisée, il est vérifié si la grue avec la configuration souhaitée est disponible chez au moins une entreprise de location de grues, le cas échéant, une offre pour la configuration de grue souhaitée par au moins une entreprise de location de grues est automatiquement créée et soumise à l'utilisateur de grue par l'intermédiaire du portail en ligne, et une confirmation de commande peut être effectuée de préférence par l'intermédiaire du portail en ligne.

4. Procédé selon l'une quelconque des revendications précédentes, **caractérisé en ce que** l'équipe de montage peut vérifier la disponibilité d'un ou de plusieurs composants de grue auprès d'au moins une entreprise de location de grues et/ou d'un fabricant de grues et/ou peut commander de manière automatisée des composants de grue nécessaires sur le chantier par l'intermédiaire du portail en ligne et/ou peut consulter les dates de livraison et/ou les délais de livraison correspondants par l'intermédiaire du portail en ligne.

5. Procédé selon l'une quelconque des revendications précédentes, **caractérisé en ce que** les informations de montage mises à disposition par l'intermédiaire du portail en ligne comprennent des instructions de fonctionnement et/ou de montage et/ou constituent un système d'assistance pour un processus de montage guidé.

6. Procédé selon l'une quelconque des revendications précédentes, **caractérisé en ce que** les paramètres de commande comprennent des informations sur la courbe de charge de la grue, des informations sur le dispositif de levage, le dispositif de rotation, le chariot roulant ainsi que des informations spécifiques au chantier.

7. Procédé selon l'une quelconque des revendications précédentes, **caractérisé en ce que** des composants de grue manquants ou défectueux sont identifiés et, le cas échéant, un ordre de livraison est établi et transmis à au moins un fabricant de grues et/ou une entreprise de location de grues.

8. Procédé selon l'une quelconque des revendications précédentes, **caractérisé en ce que** la commande de grue détecte les temps d'utilisation des composants de grue et/ou vérifie leur authenticité et transmet le résultat au portail en ligne, le portail en ligne gérant les temps d'utilisation et générant et émettant le cas échéant des indications concernant les maintenances et/ou les vérifications nécessaires des composants de grue.

9. Procédé selon l'une quelconque des revendications précédentes, **caractérisé en ce qu'**un ou plusieurs outils de montage ou outils pour le fonctionnement de la grue peuvent accéder au portail en ligne par l'intermédiaire d'un module de communication afin d'y consulter des informations nécessaires à l'utilisation des outils en ce qui concerne la configuration de la grue, par exemple des couples de serrage nécessaires pour des assemblages par vis ou des valeurs de contrôle pour des appareils de mesure.

10. Procédé selon l'une quelconque des revendications précédentes, **caractérise en ce que** l'opérateur de la grue et/ou l'équipe de montage peuvent s'autoriser sur le portail en ligne par l'intermédiaire de moyens d'autorisation de la grue, le portail en ligne filtrant et mettant à disposition des paramètres de configuration de la grue spécifiques à l'utilisateur et/ou autorisant une modification individuelle à l'utilisateur de paramètres éventuels de la grue et permettant leur transmission à la commande de grue et/ou autorisant des instructions de commande de la grue spécifiques à l'utilisateur et/ou détectant des temps de travail de l'équipe de montage à l'aide des moments d'autorisation et les transmettant le cas échéant à une entreprise de location de grues.

11. Procédé selon la revendication 10, **caractérise en ce qu'**un appareil de communication mobile avec des moyens de localisation peut être relié à la grue et/ou au portail en ligne, la zone de travail de la grue est parcourue avec l'appareil de communication et les données de localisation détectées par l'appareil de communication sont transmises au portail en ligne afin de déterminer la zone limite de travail possible de la grue et d'en tenir compte pour la configuration de la grue et/ou la commande de la grue.

12. Portail en ligne pour la configuration de grue et le montage de grue d'au moins une grue pour la mise en oeuvre du procède selon l'une quelconque des revendications précédentes.
